# EUROPÄISCHE PATENTSCHRIFT

(11) **EP 3 244 073 B1**
(45) Veröffentlichungstag und Bekanntmachung des Hinweises auf die Patenterteilung: **12.09.2018**
(21) Anmeldenummer: 17163324.1
(22) Anmeldetag: 28.03.2017
(51) Int. Cl.: F16B 5/02, F16B 41/00

(54) **VORRICHTUNG ZUM FESTLEGEN AN EINEM BAUTEIL**
DEVICE FOR FIXING ON A COMPONENT
DISPOSITIF DE FIXATION SUR UN COMPOSANT

(30) Priorität: 12.05.2016 DE 102016208176
(43) Veröffentlichungstag der Anmeldung: 15.11.2017
(60) Teilanmeldung: 18179386.0
(73) Patentinhaber: Springfix Befestigungstechnik GmbH, 73084 Salach (DE)
(72) Erfinder: Ecker, Rainer, 73033 Göppingen (DE); Bernauer, Jana, 73230 Kirchheim unter Teck (DE); Gundl, Felix, 73084 Salach (DE); Mühleisen, Anja, 89160 Dornstadt (DE)
(74) Vertreter: Patent- und Rechtsanwälte Ullrich & Naumann

(56) Entgegenhaltungen:
- WO-A2-2008/155107
- DE-A1-102012 102 906
- DE-A1-102013 200 999
- DE-A1-102014 203 274
- US-A1- 2010 303 582
- US-A1- 2013 199 004
- US-A1- 2013 276 293

## Beschreibung

Die vorliegende Erfindung betrifft eine Vorrichtung zum Festlegen an einem Bauteil, insbesondere Toleranz-Ausgleichs-Element, mit einer ersten Hülse und einer an und/oder in der ersten Hülse mittels einer Schraubverbindung festlegbaren zweiten Hülse, wobei die erste Hülse und die zweite Hülse jeweils einen Durchgang aufweisen, wobei eine Schraube durch die Durchgänge und vorzugsweise durch das Bauteil hindurch in ein Gewinde eines Haltemittels einschraubbar ist, wobei sich die Drehrichtung des Gewindes der Schraubverbindung von der Drehrichtung des Haltemittels unterscheidet und wobei an der zweiten Hülse eine Mitnahmeeinrichtung ausgebildet ist, die mit der Schraube zusammenwirken kann. Vorrichtungen der in Rede stehenden Art sind seit Jahren aus der Praxis bekannt und dienen beispielsweise der Fixierung von zwei Bauteilen, deren Abstand zueinander schwanken kann. Entsprechende Toleranz-Ausgleichs-Elemente werden beispielsweise zur Montage von Schweinwerfern in einem Kraftfahrzeug verwendet.
Bei den bekannten Vorrichtungen wird mit dem Eindrehen der Schraube in das Gewinde des Haltemittels die zweite Hülse aufgrund eines Mitnehmers, der die Schraube und die zweite Hülse verbindet, ebenfalls gedreht. Der Mitnehmer ist dabei als Federstahlklemme ausgebildet, die gegen die eingesteckte Schraube drückt. Durch die gegensinnige Drehrichtung der Schraubverbindung und des Gewindes des Haltemittels wird mit dem Eindrehen der Schraube die zweite Hülse aus der ersten Hülse herausgeschraubt. Somit ermöglicht diese Konstruktion einen Toleranzausgleich bei der Fixierung von zwei Bauteilen, deren Abstand zueinander nicht eindeutig bestimmt ist.

Entsprechende Vorrichtungen sind beispielsweise aus der DE 10 2013 200 999 A1, FR 2 792 039 B1 und der DE 100 34 968 A1 vorbekannt.

Der vorliegenden Erfindung liegt daher die Aufgabe zugrunde, eine Vorrichtung der eingangs genannten Art derart auszugestalten und weiterzubilden, dass mit konstruktiv einfachen Mitteln eine zuverlässige Fixierung der Bauteile bei einfacher Handhabung möglich ist.
Erfindungsgemäß wird die voranstehende Aufgabe durch die Merkmale des Anspruches 1 gelöst. Danach ist die in Rede stehende Vorrichtung dadurch gekennzeichnet, dass eine lösbare Verdrehsicherung angeordnet ist und dass die erste Hülse und die zweite Hülse von der Verdrehsicherung in einer definierten, ineinander geschraubten Position gehalten sind.

Es ist zunächst erkannt worden, dass die Handhabung der Vorrichtung in überraschend einfacher Weise durch die Anordnung einer Verdrehsicherung erheblich verbessert werden kann. Dabei ist die Verdrehsicherung derart ausgebildet, dass die erste Hülse und die zweite Hülse in einer vorgegebenen Position, in welcher die Hülsen ineinander geschraubt sind, gehalten werden. Dadurch ist sicher gestellt, dass die Hülsen stets den gleichen Abstand zueinander aufweisen, so dass ein Einbau der Vorrichtungen mit konkret vorgegebenen Arbeitsschritten möglich ist. Eine Kontrolle und Justierung des Abstandes der Hülsen durch ein- bzw. ausdrehen der Hülsen ist nicht notwendig. Da die Verdrehsicherung lösbar ausgestaltet ist, kann diese vor dem bzw. durch das Einstecken/Eindrehen der Schraube die Drehbewegung zwischen erster Hülse und zweiter Hülse freigeben.
Der Begriff "lösbar" in Bezug auf die Verdrehsicherung ist dahingehend zu verstehen, dass die Verdrehsicherung - wie auch immer - definiert überwindbar ist, so dass eine Drehbewegung der Hülsen gegeneinander möglich ist. Folglich dient die Verdrehsicherung insbesondere als Transportsicherung, sperrt nämlich ein Verdrehen der Hülsen gegeneinander, so dass der Abstand der Hülse fest vorgebbar ist.

Dabei ist der Begriff "sperren" im weitesten Sinne zu verstehen, soll ein Verdrehen der Hülsen gegeneinander nämlich zumindest gehemmt sein, so dass sich die Hülsen während eines Transports nicht in- bzw. auseinander drehen. In erfindungsgemäßer Weise ist zunächst erkannt worden, dass die Verdrehsicherung durch ein Bruchelement realisiert sein kann, das sich von der ersten Hülse in den Durchgang hinein erstreckt. Dabei kann an der zweiten Hülse ein, vorzugsweise in den Durchgang hineinragendes, Widerlager ausgebildet sein, so dass das Bruchelement bei einem Verdrehen der Hülsen an das Widerlager anstößt und die Drehbewegung hemmt. Das Widerlager kann gabelförmig, insbesondere durch zwei Vorsprünge, realisiert sein, wobei die Vorsprünge das Bruchelement zwischen sich aufnehmen. Bei einer solchen Ausgestaltung kann das Widerlager durch ein entsprechend geformtes Blockierungsmittel gebildet sein, so dass das Blockierungsmittel eine Doppelfunktion erfüllt, nämlich als Teil der Verdrehsicherung und als Teil der Mitnahmeeinrichtung dient. Des Weiteren ist denkbar, dass das Bruchelement zwei Erhebungen aufweist, in die das Widerlager eingreift.Somit ist eine Drehbewegung in beide Richtungen unterbunden. An den Vorsprüngen bzw. den Erhebungen und/oder an dem Bruchelement können Einführschrägen ausgebildet sein, so dass das Bruchelement beim Ineinanderdrehen der Hülsen über die Erhebungen in das Widerlager einschnappt. In vorteilhafter Weise kann von einer in die Durchgänge eingebrachten Schraube eine Kraft auf das Bruchelement und/oder das Widerlager ausgeübt werden, wobei das Bruchelement und/ oder das Widerlager bei Erreichen einer definierten Kraft abbrechen kann und somit die Drehbewegung zwischen den beiden Hülsen freigibt. Dazu ist denkbar, dass das Bruchelement und/oder das Widerlager mindestens eine Sollbruchstelle aufweist. Die Kraft, welche benötigt wird, um das Bruchelement und/oder das Widerlager abzubrechen, kann durch die Wahl der Geometrie und/oder des Materials und/oder der Anzahl der Sollbruchstellen des Bruchelements und/oder des Widerlagers eingestellt werden. In vorteilhafter Weise ist denkbar, dass die Verdrehsicherung als Klammer ausgebildet ist. Dabei kann die Klammer ein integraler Bestandteil einer der beiden Hülsen sein. Bei einer solchen Konstruktion kann die Klammer mit einer der Hülsen einteilig ausgebildet sein, beispielsweise als Spritzgussteil und die andere Hülse umgreifen und/oder in diese eingreifen. Weiterhin kann die Klammer derart konstruiert sein, dass sie von der Hülse, deren Bestandteil sie ist, abgebrochen werden kann, um somit die Verdrehsicherung zu lösen.
Des Weiteren ist denkbar, dass die Klammer sowohl mit der ersten Hülse als auch mit der zweiten Hülse abnehmbar verbunden ist. Insbesondere kann die Klammer die erste Hülse und/oder die zweite Hülse umgreifen bzw. in diese eingreifen. Durch eine solche Ausgestaltung ist eine besonders sichere und zuverlässige Verdrehsicherung realisiert.
Alternativ oder zusätzlich können die erste Hülse und die zweite Hülse stoffschlüssig miteinander verbunden sein, um die Verdrehsicherung zu realisieren. Zur Herstellung der stoffschlüssigen Verbindung kann beispielsweise ein Klebstoff dienen. Dieser kann derart ausgewählt bzw. angepasst sein, dass die Verbindung freigegeben bzw. gelöst wird, wenn ein definiertes Drehmoment bzw. eine definierte Kraft zwischen erster Hülse und zweiter Hülse vorliegt. In vorteilhafter Weise kann der Klebstoff auf sich axial gegenüberliegenden Flächen der ersten Hülse und der zweiten Hülse aufgebracht sein. Alternativ oder zusätzlich kann der Klebstoff zwischen den die Schraubverbindung realisierenden Gewinden der ersten Hülse und der zweiten Hülse aufgebracht sein.
In weiter vorteilhafter Weise können die Gewinde der ersten und zweiten Hülse, die die Schraubverbindung realisieren, zumindest bereichsweise nicht miteinander korrespondieren, so dass die Verdrehsicherung über eine Gewindeklemmung verwirklicht ist. Vor der Auslieferung der Vorrichtung können die beiden Hülsen mit einem abgestimmten Drehmoment ineinander geschraubt werden, so dass die gewünschte Gewindeklemmung erzielt wird, durch welche die Verdrehsicherung realisiert ist.
Zur Realisierung einer Verdrehsicherung ist es weiterhin möglich, dass eine Anlagefläche der ersten Hülse und eine, insbesondere axial gegenüberliegende, Anlagefläche der zweiten Hülse zumindest bereichsweise kraftschlüssig miteinander verbunden sind. Dazu können die Anlagefläche der ersten Hülse und/oder die Anlagefläche der zweiten Hülse aus einem Elastomer, insbesondere Gummi, bestehen und/oder Erhebungen oder Vertiefungen aufweisen. Durch ein ineinander Schrauben der beiden Hülsen kommen die Anlageflächen in Kontakt, so dass eine kraftschlüssige Verbindung erzeugt wird, die sich durch Aufbringen eines definierten Drehmoments bzw. einer definierten Kraft lösen lässt.

Des Weiteren ist denkbar, dass die Verdrehsicherung durch eine Kombination der voranstehend genannten Ausführungsbeispiele realisiert ist, bspw. durch eine Klammer und zusätzlich ein Bruchelement.
Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel einer erfindungsgemäßen Vorrichtung,
- Fig. 2: in einer weiteren schematischen Darstellung das Ausführungsbeispiel gemäß Fig. 1,
- Fig. 3: in einer weiteren schematischen Darstellung das Ausführungsbeispiel gemäß Fig. 1,
- Fig. 4: in einer schematischen Darstellung ein weiteres Ausführungsbeispiel einer erfindungsgemäßen Vorrichtung,
- Fig. 5: in einer weiteren schematischen Darstellung das Ausführungsbeispiel gemäß Fig. 4,
- Fig. 6: in einer schematischen Darstellung ein weiteres Ausführungsbeispiel einer erfindungsgemäßen Vorrichtung,
- Fig. 7: in einer weiteren schematischen Darstellung das Ausführungsbeispiel gemäß Fig. 6,
- Fig. 8: in einer schematischen Darstellung ein weiteres Ausführungsbeispiel einer erfindungsgemäßen Vorrichtung und
- Fig. 9: in einer schematischen Darstellung ein weiteres Ausführungsbeispiel einer erfindungsgemäßen Vorrichtung.

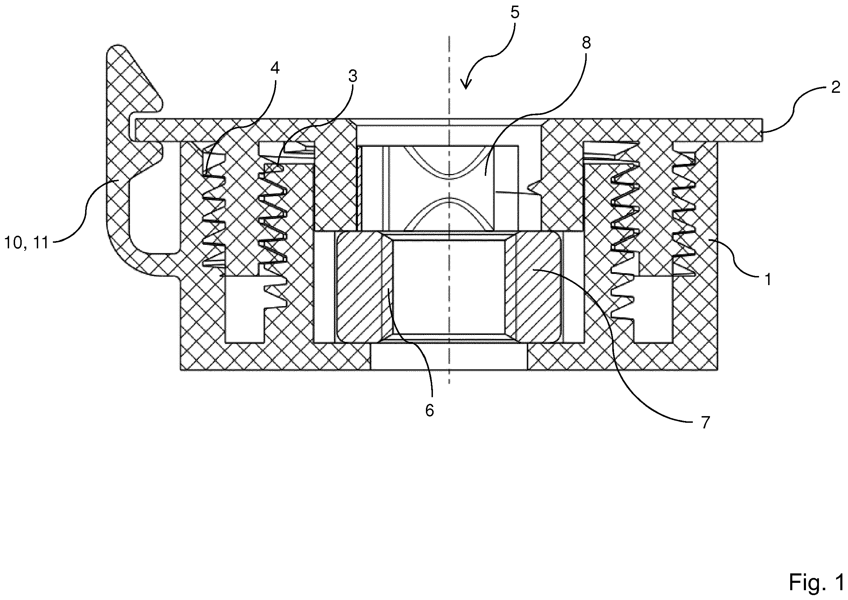

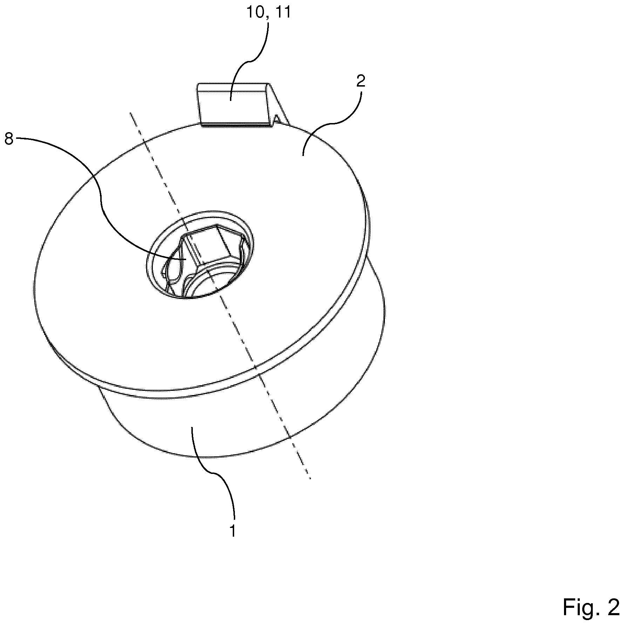

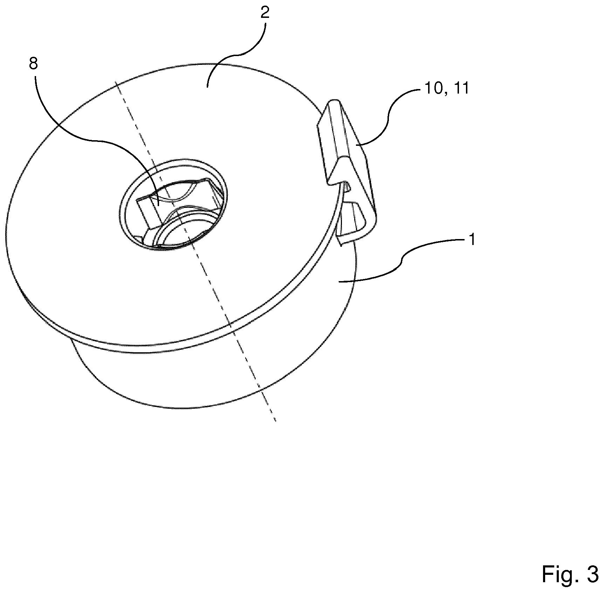

In den Figuren 1 bis 3 ist ein Ausführungsbeispiel einer erfindungsgemäßen Vorrichtung gezeigt. Die Vorrichtung umfasst eine erste Hülse 1 und eine an beziehungsweise in der ersten Hülse 1 festlegbaren zweiten Hülse 2. Die erste Hülse 1 und die zweite Hülse 2 weisen jeweils ein erstes Gewinde 3 und ein zweites Gewinde 4 auf. Durch die ersten und zweiten Gewinde 3, 4 ist eine Schraubverbindung realisiert. An dieser Stelle sei ausdrücklich darauf hingewiesen, dass die erste Hülse 1 und zweite Hülse 2 jeweils lediglich ein Gewinde 3, 4 oder auch mehr als zwei miteinander korrespondierende Gewinde 3, 4 aufweisen können.
Durch den Durchgang 5 der ersten Hülse 1 und zweiten Hülse 2 ist eine nicht dargestellte Schraube 18 in ein Gewinde 6 eines Haltemittels 7, beispielsweise eine Mutter, einschraubbar. Dabei unterscheidet sich die Drehrichtung des ersten Gewindes 3 und zweiten Gewindes 4 gegenüber der Drehrichtung des Gewindes 6 von dem Haltemittel 7. Des Weiteren ist an der zweiten Hülse 2 eine Mitnahmeeinrichtung ausgebildet, die mit der Schraube zusammenwirken kann, beispielsweise eine Federklammer, welche als Reibelement wirkt.
In den Figuren 1 bis 3 ist des Weiteren gezeigt, dass an der ersten Hülse 1 eine Klammer 10 als Verdrehsicherung 11 ausgebildet ist. Um die Verdrehsicherung 11 zu lösen kann die Klammer 10 von der ersten Hülse 1 beispielsweise händisch abgebrochen werden.

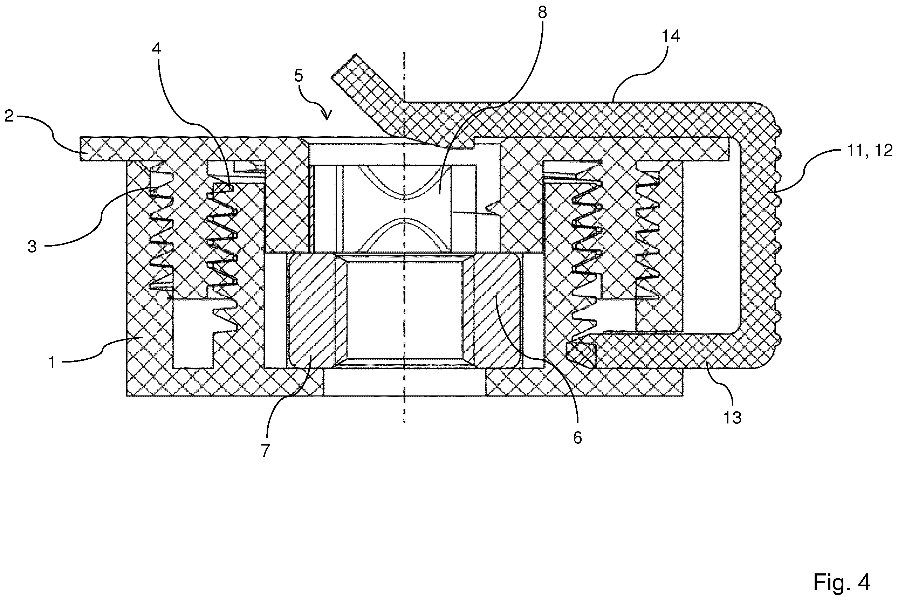

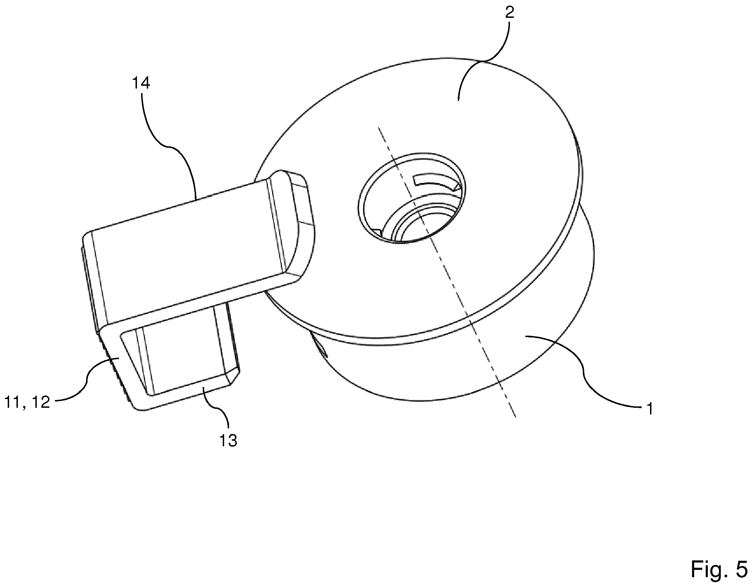

Die Figuren 4 und 5 zeigen ein weiteres Ausführungsbeispiel einer erfindungsgemäßen Vorrichtung. Dabei ist die Verdrehsicherung 11 als von der ersten Hülse 1 und der zweiten Hülse 2 lösbare Klammer 12 ausgebildet.

Die Klammer 12 weißt einen ersten Schenkel 13 auf, der in die erste Hülse 1 eingreift. Des Weiteren ist ein zweiter Schenkel 14 ausgebildet, mit dem die Klammer die zweite Hülse 2 umgreift, so dass eine Verdrehsicherung 11 realisiert ist. Zum Lösen der Verdrehsicherung 11 kann die Klammer 12 beispielsweise händisch von der Vorrichtung abgenommen werden.

Des Weiteren entspricht das Ausführungsbeispiel gemäß Fig. 4 und 5 dem in den Fig. 1 bis 3 gezeigten Ausführungsbeispiel, sodass zur Vermeidung von Wiederholungen auf die diesbezügliche Figurenbeschreibung verwiesen wird.

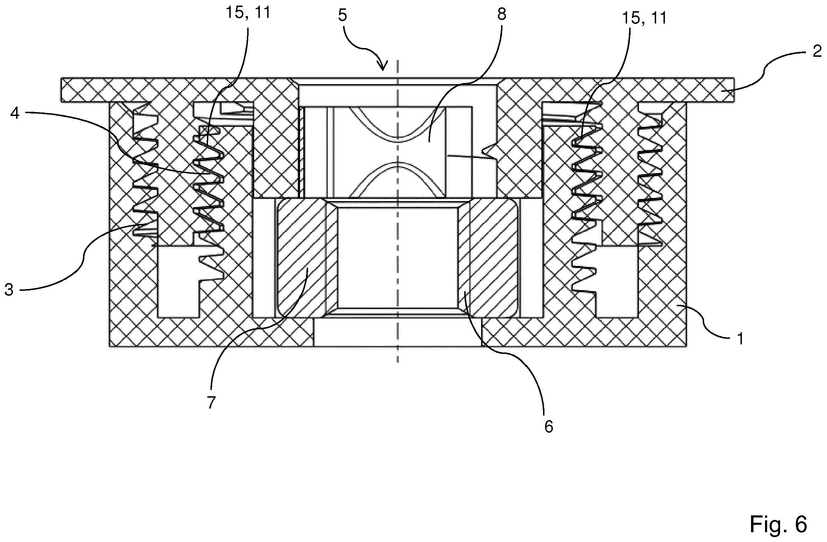

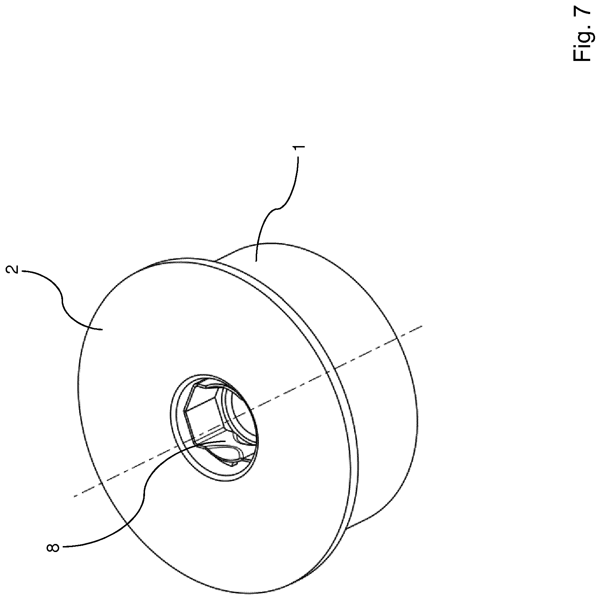

Die Figuren 6 und 7 zeigen ein weiteres Ausführungsbeispiel einer erfindungsgemäßen Vorrichtung. Dabei ist die Verdrehsicherung 11 durch einen Klebstoff realisiert, der in dem ersten Gewinde 3 und/oder dem zweiten Gewinde 4 der ersten Hülse 1 und zweiten Hülse 2 aufgebracht ist. Der Klebstoff ist derart ausgewählt beziehungsweise abgestimmt, dass sich die beiden Hülsen 1, 2 auseinanderschrauben lassen, wenn ein definiertes Drehmoment auf diese wirkt. Das Drehmoment ist so zu wählen, dass die Mitnahmeeinrichtung 8 ein entsprechend großes Drehmoment von der Schraube auf die zweite Hülse 2 übertragen kann.

Des Weiteren entspricht das Ausführungsbeispiel gemäß Fig. 6 den Ausführungsbeispielen der Fig. 1 bis 5, so dass zur Vermeidung von Wiederholungen auf die voranstehende Figurenbeschreibung verwiesen wird.

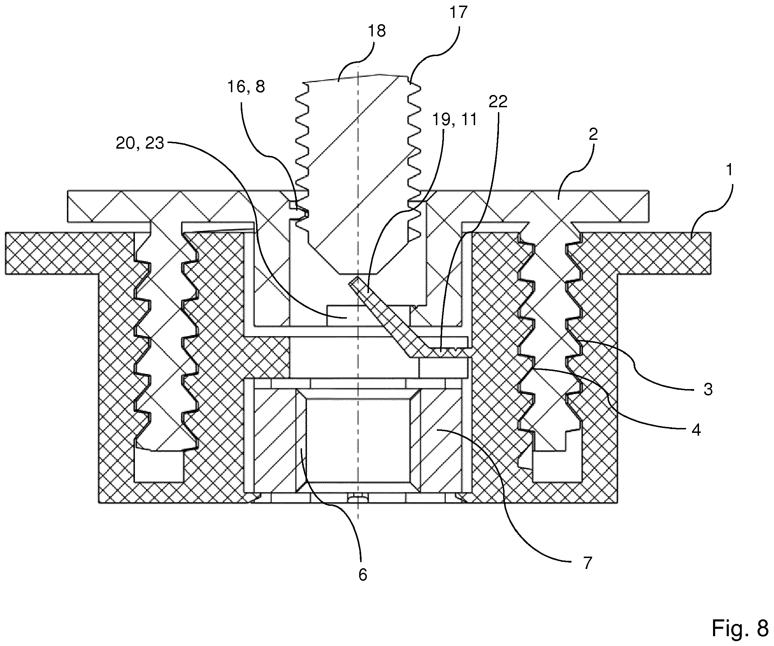

In Figur 8 ist ein weiteres Ausführungsbeispiel einer erfindungsgemäßen Vorrichtung in einer schematischen Darstellung gezeigt. Dabei ist die Mitnahmeeinrichtung 8 durch ein in den Durchgang 5 hineinragendes Gewindeelement 16 und ein sich in den Durchgang erstreckendes Blockierungsmittel 23 realisiert, das in Einsteckrichtung der Schraube nach dem Gewindeelement 16 ausgebildet ist. Das Gewindeelement 16 und das Blockierungsmittel 23 sind dabei als Nase bzw. Materialerhebung ausgestaltet.

In Figur 8 ist des Weiteren das als Verdrehsicherung 11 dienende Bruchelement 19 dargestellt, das sich von der ersten Hülse 1 in den Durchgang 5 hinein erstreckt. Dabei dient das Blockierungsmittel 23 zusätzlich als Widerlager 20 für das Bruchelement 19. Das Blockierungsmittel 23 ist gabelförmig ausgebildet, so dass es in beide Drehrichtungen sperrt. Wesentlich ist dabei, dass das Bruchelement 19 in Einsteckrichtung der Schraube 18 gesehen vor das Blockierungsmittel 23 hinausragt, so dass die Schraube 18 zunächst in Kontakt mit dem Bruchelement 19 kommt. Das Bruchelement 19 wird durch das Einbringen bzw. Eindrehen der Schraube 18 mit einer Kraft beaufschlagt und bricht, insbesondere an der Sollbruchstelle 22, wenn eine definierte Kraft überschritten ist. Sobald das Bruchelement 19 weggebrochen ist, ist die Verdrehsicherung 11 gelöst.

Das Gewindeelement 16 dient als Gegengewinde für das Gewinde 17 der Schraube 18. Wenn die Schraube 18 in den Durchgang 5 eingebracht wird, stößt sie gegen das Gewindeelement 16, lässt sich durch Drehen jedoch in Axialrichtung fortbewegen. Wenn die Verdrehsicherung 11 gelöst bzw. weggebrochen ist, stößt die Schraube 18 an das Blockierungsmittel 23. Durch das weitere Eindrehen der Schraube 18 wird diese zwischen Gewindeelement 16 und Blockierungsmittel 23 fixiert und ist somit mit der zweiten Hülse 2 verbunden. Durch die Drehbewegung der Schraube 18 ist die zweite Hülse 2 aus der ersten Hülse 1 ausschraubbar. Dabei steigt das auf das Blockierungsmittel 23 wirkende Drehmoment bzw. die auf das Blockierungsmittel 23 wirkende Kraft an, sobald die miteinander zu verbindenden Bauteile 9 durch die erste Hülse 1 und die zweite Hülse 2 verspannt werden. Das Blockierungsmittel 23 ist derart ausgestaltet, dass es mit Erreichen der gewünschten Vorspannung bricht und somit die Schraube 18 in Axialrichtung freigibt. Hierzu weist das Blockierungsmittel 23 beispielsweise eine Sollbruchstelle 24 auf, um nämlich eine definierte Zerstörung des Blockierungsmittels 23 zu gewährleisten. In besonders vorteilhafter Weise sind drei Gewindeelemente 16 in Umfangsrichtung versetzt zueinander ausgebildet, so dass eine Selbstzentrierung der Schraube 18 beim Einbringen in den Durchgang 5 erreicht wird.

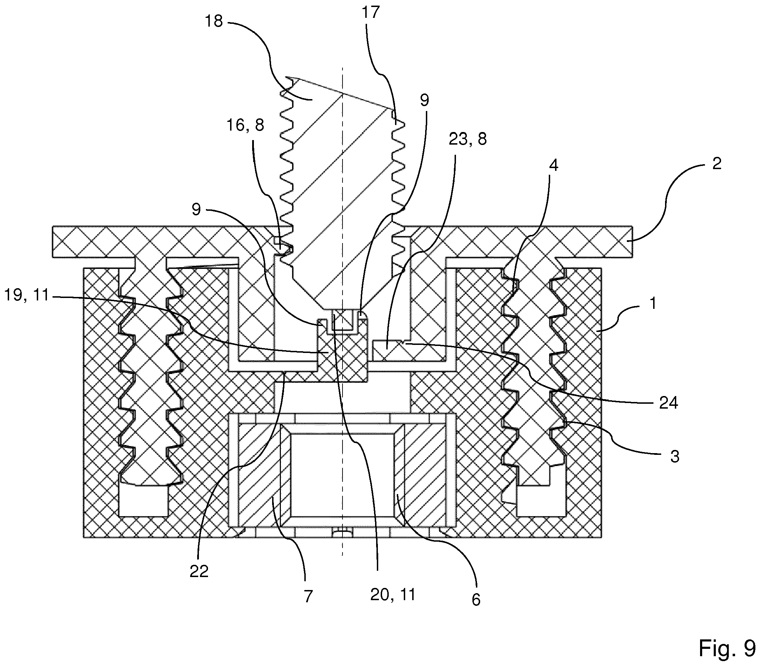

In Figur 9 ist ein weiteres Ausführungsbeispiel einer erfindungsgemäßen Vorrichtung in einer schematischen Darstellung gezeigt. Dabei weist das Bruchelement 19 zwei Erhebungen 9 auf, zwischen welchen das Widerlager 20 angeordnet ist. Das Widerlager 20 ist entgegen dem Ausführungsbeispiel gemäß Figur 8 als separates Bauteil realisiert. Somit dient das Blockierungsmittel 23 ausschließlich als Teil der Mitnahmeeinrichtung 8. Um die durch das Bruchelement 19 und das Widerlager 20 gebildete Verdrehsicherung 11 zu lösen, drückt die Schraube 18 auf das Widerlager 20 und somit auch auf das Bruchelement 19, so dass diese abbrechen.

Des Weiteren wird zur Vermeidung von Wiederholungen auf die Beschreibung der Figuren 1 bis 8 verwiesen, die analog für Figur 9 gilt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: erste Hülse
- 2: zweite Hülse
- 3: erstes Gewinde
- 4: zweites Gewinde
- 5: Durchgang
- 6: Gewinde (Haltemittel)
- 7: Haltemittel
- 8: Mitnahmeeinrichtung
- 9: Erhebung
- 10: Klammer
- 11: Verdrehsicherung
- 12: Klammer
- 13: erster Schenkel
- 14: zweiter Schenkel
- 15: Klebstoff
- 16: Gewindeelement
- 17: Gewinde (Schraube)
- 18: Schraube
- 19: Bruchelement
- 20: Widerlager
- 21: Vorsprung
- 22: Sollbruchstelle (Bruchelement)
- 23: Blockierungsmittel
- 24: Sollbruchstelle (Blockierungsmittel)

## Patentansprüche

1. Vorrichtung zum Festlegen an einem Bauteil, insbesondere Toleranz-Ausgleichs-Element, mit einer ersten Hülse (1) und einer an und/oder in der ersten Hülse (1) mittels einer Schraubverbindung festlegbaren zweiten Hülse (2), wobei die erste Hülse (1) und die zweite Hülse (2) jeweils einen Durchgang (5) aufweisen, wobei eine Schraube (18) durch die Durchgänge (5) und vorzugsweise durch das Bauteil hindurch in ein Gewinde (6) eines Haltemittels (7) einschraubbar ist, wobei sich die Drehrichtung des Gewindes (3, 4) der Schraubverbindung von der Drehrichtung des Haltemittels (7) unterscheidet, wobei an der zweiten Hülse (2) eine Mitnahmeeinrichtung (8) ausgebildet ist, die mit der Schraube (18) zusammenwirken kann, wobei eine lösbare Verdrehsicherung (11) angeordnet ist und wobei die erste Hülse (1) und die zweite Hülse (2) von der Verdrehsicherung (11) in einer definierten, ineinander geschraubten Position gehalten sind,
**dadurch gekennzeichnet, dass** die Verdrehsicherung (11) durch ein Bruchelement (19) realisiert ist, das sich von der ersten Hülse (1) in den Durchgang (5) hinein erstreckt.

2. Vorrichtung nach Anspruch 1, **dadurch gekennzeichnet, dass** die Verdrehsicherung (11) als Klammer (10, 12) realisiert ist.

3. Vorrichtung nach Anspruch 2, **dadurch gekennzeichnet, dass** die Klammer (10) integraler Bestandteil einer der beiden Hülsen (1, 2) ist und die andere Hülse (1, 2) umgreift und/oder in die andere Hülse (1, 2) eingreift.

4. Vorrichtung nach Anspruch 1 oder 2, **dadurch gekennzeichnet, dass** die Klammer (12) abnehmbar mit der ersten Hülse (1) und der zweite Hülse (2) verbunden ist.

5. Vorrichtung nach einem der Ansprüche 1 bis 4 **dadurch gekennzeichnet, dass** die erste Hülse (1) und die zweite Hülse (2) stoffschlüssig, beispielsweise über einen Klebstoff (15), miteinander verbunden sind, um die Verdrehsicherung (11) zu realisieren.

6. Vorrichtung nach Anspruch 5, **dadurch gekennzeichnet, dass** der Klebstoff (15) auf sich axial gegenüberliegenden Flächen der ersten Hülse (1) und der zweiten Hülse (2) und/oder zwischen den die Schraubverbindung realisierenden Gewinden (3, 4) der ersten Hülse (1) und der zweiten Hülse (2) aufgebracht ist.

7. Vorrichtung nach einem der Ansprüche 1 bis 6, **dadurch gekennzeichnet, dass** die die Schraubverbindung realisierenden Gewinde (3, 4) der ersten Hülse (1) und der zweiten Hülse (2) zumindest bereichsweise nicht miteinander korrespondieren, so dass die Verdrehsicherung (11) über eine Gewindeklemmung realisiert ist.

8. Vorrichtung nach einem der Ansprüche 1 bis 7, **dadurch gekennzeichnet, dass** eine Anlagefläche der ersten Hülse (1) und eine Anlagefläche der zweiten Hülse (2) zumindest bereichsweise kraftschlüssig miteinander verbunden sind, um die Verdrehsicherung (11) zu realisieren.

9. Vorrichtung nach Anspruch 8, **dadurch gekennzeichnet, dass** die Anlagefläche der ersten Hülse (1) und/oder die Anlagefläche der zweiten Hülse (2) aus einem Elastomer, insbesondere aus Gummi, besteht und/oder Erhebungen bzw. Vertiefungen aufweist.

10. Vorrichtung nach einem der Ansprüche 1 bis 9, **dadurch gekennzeichnet, dass** an der zweiten Hülse ein in den Durchgang (5) hineinragendes Widerlager (20) ausgebildet ist, an das das Bruchelement (19) bei einem Verdrehen der Hülsen (1, 2) gegeneinander anstößt.

11. Vorrichtung nach einem der Ansprüche 1 bis 10, **dadurch gekennzeichnet, dass** von einer in die Durchgänge (5) eingebrachten Schraube (18) eine Kraft auf das Bruchelement (19) und/oder das Widerlager (20) ausübbar ist und dass das Bruchelement (19) bei Erreichen einer definierten Kraft abbricht.

12. Vorrichtung nach einem der Ansprüche 1 bis 11, **dadurch gekennzeichnet, dass** das Bruchelement (19) mindestens eine Sollbruchstelle (22) aufweist.

## Claims

1. Device for securing to a component, in particular tolerance compensation element, having a first sleeve (1) and a second sleeve (2) which can be secured on and/or in the first sleeve (1) by means of a screw connection, wherein the first sleeve (1) and the second sleeve (2) each have a passage (5), wherein a screw (18) can be screwed through the passages (5) and preferably through the component into a thread (6) of a retention means (7), wherein the rotation direction of the thread (3, 4) of the screw connection differs from the rotation direction of the retention means (7), wherein there is formed on the second sleeve (2) a carrier device (8) which can cooperate with the screw (18), wherein a releasable torsion prevention means (11) is arranged and wherein the first sleeve (1) and the second sleeve (2) are retained by the torsion prevention means (11) in a defined position screwed one in the other,
**characterised in that** the torsion prevention means (11) is produced by means of a breaking element (19) which extends from the first sleeve (1) into the passage (5).

2. Device according to claim 1, **characterised in that** the torsion prevention means (11) is produced as a bracket (10, 12) .

3. Device according to claim 2, **characterised in that** the bracket (10) is an integral component of one of the two sleeves (1, 2) and the other sleeve (1, 2) engages around and/or engages in the other sleeve (1, 2).

4. Device according to claim 1 or 2, **characterised in that** the bracket (12) is connected to the first sleeve (1) and the second sleeve (2) so as to be able to be removed.

5. Device according to any one of claims 1 to 4,
**characterised in that** the first sleeve (1) and the second sleeve (2) are connected to each other in a materially engaging manner, for example, by means of an adhesive (15), in order to produce the torsion prevention means (11).

6. Device according to claim 5, **characterised in that** the adhesive (15) is applied to axially opposing faces of the first sleeve (1) and the second sleeve (2) and/or between the threads (3, 4) of the first sleeve (1) and the second sleeve (2) which form the screw connection.

7. Device according to any one of claims 1 to 6,
**characterised in that** the threads (3, 4) of the first sleeve (1) and the second sleeve (2) which form the screw connection at least partially do not correspond to each other so that the torsion prevention means (11) is produced by means of a thread clamping.

8. Device according to any one of claims 1 to 7,
**characterised in that** an abutment face of the first sleeve (1) and an abutment face of the second sleeve (2) are at least partially connected to each other in a non-positive-locking manner in order to produce the torsion prevention means (11).

9. Device according to claim 8, **characterised in that** the abutment face of the first sleeve (1) and/or the abutment face of the second sleeve (2) comprises an elastomer material, in particular rubber, and/or has protrusions or recesses.

10. Device according to any one of claims 1 to 9,
**characterised in that** there is formed on the second sleeve an abutment (20) which protrudes into the passage (5) and which the breaking element (19) strikes when the sleeves (1, 2) are twisted relative to each other.

11. Device according to any one of claims 1 to 10,
**characterised in that** a force can be applied from a screw (18) which is introduced into the passages (5) to the breaking element (19) and/or the abutment (20), and **in that** the breaking element (19) breaks off when a defined force is reached.

12. Device according to any one of claims 1 to 11,
**characterised in that** the breaking element (19) has at least one desired breaking location (22).

## Revendications

1. Dispositif destiné à être fixé sur un composant, plus particulièrement un élément de compensation de tolérance, avec un premier manchon (1) et un deuxième manchon (2) pouvant être fixé sur et/ou dans le premier manchon (1) au moyen d'une liaison vissée, le premier manchon (1) et le deuxième manchon (2) comprenant chacun un passage (5), une vis (18) pouvant être vissés à travers les passages (5) et de préférence à travers le composant dans un filetage (6) d'un moyen de maintien (7), le sens de rotation du filetage (3, 4) de la liaison vissée étant différent du sens de rotation du moyen de maintien (7), moyennant quoi, sur le deuxième manchon (2), est réalisé un dispositif d'entraînement (8) qui peut interagir avec la vis (18), une protection anti-rotation amovible (11) étant disposée et le premier manchon (1) et le deuxième manchon (2) étant maintenus par la protection anti-rotation (11) dans une position vissée entre eux déterminée,
**caractérisé en ce que** la protection anti-rotation (11) est réalisée à l'aide d'un élément de rupture (19) qui s'étend à partir du premier manchon (1) vers l'intérieur du passage (5).

2. Dispositif selon la revendication 1, **caractérisé en ce que** la protection anti-rotation (11) est réalisée sous la forme d'une agrafe (10, 12).

3. Dispositif selon la revendication 2, **caractérisé en ce que** l'agrafe (10) fait partie intégrante d'un des deux manchons (1, 2) et entoure l'autre manchon (1, 2) et/ou s'emboîte dans l'autre manchon (1, 2).

4. Dispositif selon la revendication 1 ou 2, **caractérisé en ce que** l'agrafe (12) est reliée de manière amovible avec le premier manchon (1) et le deuxième manchon (2).

5. Dispositif selon l'une des revendications 1 à 4,
**caractérisé en ce que** le premier manchon (1) et le deuxième manchon (2) sont reliés entre eux par liaison de matière, par exemple par l'intermédiaire d'une colle (15), afin de réaliser la protection anti-rotation (11).

6. Dispositif selon la revendication 5, **caractérisé en ce que** la colle (15) est appliquée sur des surfaces axialement opposées du premier manchon (1) et du deuxième manchon (2) et/ou entre les filetages (3, 4), réalisant la liaison vissée, du premier manchon (1) et du deuxième manchon (2).

7. Dispositif selon l'une des revendications 1 à 6,
**caractérisé en ce que** les filetages (3, 4), réalisant la liaison vissée, du premier manchon (1) et du deuxième manchon (2), ne correspondent pas entre eux au moins à certains endroits, de façon à ce que la protection anti-rotation (11) soit réalisée grâce à un blocage des filetages.

8. Dispositif selon l'une des revendications 1 à 7,
**caractérisé en ce qu'**une surface d'appui du premier manchon (1) et une surface d'appui du deuxième manchon (2) sont reliées entre elles par force au moins à certains endroits, afin de réaliser la protection anti-rotation (11).

9. Dispositif selon la revendication 8, **caractérisé en ce que** la surface d'appui du premier manchon (1) et/ou la surface d'appui du deuxième manchon (2) est constituée d'un élastomère, plus particulièrement de caoutchouc et/ou présente des bossages ou des creux.

10. Dispositif selon l'une des revendications 1 à 9,
**caractérisé en ce que**, sur le deuxième manchon, est réalisé un contre-palier (20) dépassant dans le passage (5), contre lequel bute l'élément de rupture (19) lors d'une rotation des manchons (1, 2) l'un par rapport à l'autre.

11. Dispositif selon l'une des revendications 1 à 10,
**caractérisé en ce qu'**une force peut être exercée sur l'élément de rupture (19) et/ou sur le contre-palier (20) par un vis (18) insérée dans les passages (5) et **en ce que** l'élément de rupture (19) se rompt lorsqu'une force définie est atteinte.

12. Dispositif selon l'une des revendications 1 à 11,
**caractérisé en ce que** l'élément de rupture (19) comprend au moins un point de rupture (22).
